# EUROPÄISCHE PATENTSCHRIFT

(11) **EP 1 531 280 B1**
(45) Veröffentlichungstag und Bekanntmachung des Hinweises auf die Patenterteilung: **16.04.2008**
(21) Anmeldenummer: 04026794.0
(22) Anmeldetag: 11.11.2004
(51) Int. Cl.: F16D 27/112

(54) **Elektromagnetische Reibscheibenkupplung**
Electromagnetic friction clutch
Embrayage électromagnétique à friction

(30) Priorität: 14.11.2003 DE 10353560
(43) Veröffentlichungstag der Anmeldung: 18.05.2005
(73) Patentinhaber: Linnig Trucktec GmbH, 88677 Markdorf (DE)
(72) Erfinder: Krafft, Rainer, Dr., 88633 Heiligenberg (DE)
(74) Vertreter: Eisele, Otten, Roth & Dobler

(56) Entgegenhaltungen:
- US-A- 2 970 681
- US-A- 4 564 092
- US-A- 5 036 964

## Beschreibung

Die Erfindung betrifft eine elektromagnetische Reibscheibenkupplung nach dem Oberbegriff des Anspruchs 1.

### Stand der Technik:

Eine aus dem Stand der Technik bekannte elektromagnetische Reibscheibenkupplung umfasst unter anderem einen Rotor, einen Elektromagneten sowie eine Ankerscheibe. Bei Zuschaltung des Elektromagneten wird ein Magnetfeld ausgebildet, was zu einem Anziehen der Ankerscheibe an den Rotor führt. Bei abgeschaltetem Elektromagneten und damit Wegfall der Anziehungskraft wird die Ankerscheibe durch ein Federelement vom Rotor getrennt und in eine Abschaltposition der Kupplung zurückgeführt. In der Abschaltposition wird die Ankerscheibe vom Rotor durch einen Luftspalt getrennt. Dieser Luftspalt muss einerseits möglichst gering sein, so dass die durch das Magnetfeld verursachten Kräfte möglichst groß sind, aber andererseits sollte der Luftspalt so groß sein, dass im Betrieb ein unbeabsichtigtes Anschlagen der Ankerscheibe am Rotor, z.B. durch auftretende axiale Schwingungen verhindert wird. Das wiederholte Anziehen der Ankerscheibe an den Rotor verursacht durch Reibung der Ankerscheibe mit dem Rotor Verschleiß, was zu einem vergrößerten Luftspalt der beiden Reibpartner im nicht geschalteten Zustand führt. Das hat zur Folge, dass einerseits die Federkraft zur Überwindung des Luftspalts ansteigt, während andererseits die durch das Magnetfeld auf die Ankerscheibe wirkende Kraft mit größer werdendem Luftspalt deutlich abnimmt und damit das übertragbare Drehmoment absinkt. Im Extremfall führt dies zum Funktionsverlust der Reibscheibenkupplung.

Dieser unerwünschte Effekt lässt sich teilweise dadurch kompensieren, dass eine Feder mit degressiver Federkennlinie eingesetzt wird. Dennoch führt auch eine Feder mit einer degressiven Federkennlinie dazu, dass bei immer größer werdendem Luftspalt das übertragbare Drehmoment erheblich absinkt und die Kupplung ihre vorgesehene Funktionsfähigkeit verliert.

Eine gattungsgemäße Kupplung ist aus US-A-5,036,964 bekannt.

### Aufgabe und Vorteile der Erfindung:

Der Erfindung liegt die Aufgabe zugrunde, eine elektromagnetische Kupplung der einleitend bezeichneten Art bereitzustellen, die eine vergleichsweise größere Lebensdauer besitzt.

Diese Aufgabe wird durch die Merkmale des Anspruchs 1 gelöst.

In den Unteransprüchen sind vorteilhaft und zweckmäßige Weiterführungen der Erfindung angegeben.

Die Erfindung geht von einer elektromagnetisch betätigbaren Reibscheibenkupplung aus, die einen Elektromagneten sowie einen Rotor und ein Ankerelement umfasst, die mittels des Elektromagneten mit einem Magnetfeld für ein Zusammenwirken von Rotor und Ankerelement beaufschlagbar sind, wobei das Ankerelement an Rückstellmittel angeordnet ist, durch die das Ankerelement entlang einer Rotationsachse des Rotors mit Magnetkräften um einen Verschiebeweg in eine Anlageposition am Rotor bewegbar ist und ohne Magnetkräfte elastisch in eine Position zurückkehrt, in welcher das Ankerelement und der Rotor sich berührungsfrei gegeneinander bewegen können. Der Kern der Erfindung liegt nun darin, dass die Rückstellmittel neben einem elastischen Anteil einen plastischen Anteil umfassen, der bei einem vergrößerten originären Verschiebeweg durch Verschleiß zu einer plastischen Verformung der Rückstellmittel führt, so dass die Vergrößerung des Verschiebewegs zumindest teilweise kompensierbar ist. Auf diese Weise ändern sich die Verhältnisse für die elastische Auslenkung der Rückstellmittel nur in soweit, wie die plastische Verformung eine Vergrößerung des Verschiebewegs nicht vollständig kompensiert. Dies ist jedoch bereits ausreichend, um eine mit einem derartigen Rückstellmittel ausgestattete elektrische Kupplung deutlich länger betreiben zu können, ohne dass die Kupplung ihre Funktionsfähigkeit verliert. Denn der unerwünschten Verschiebeweg- bzw. Spaltvergrößerung zwischen Ankerelement und Rotor lässt sich durch die plastische Verformung entgegenwirken, wobei der elastische Anteil der Rückstellmittel nach wie vor dafür sorgt, dass die Ankerscheibe nicht anschlägt, d.h. in ausreichendem Maße zurückgezogen wird, wenn das Magnetfeld des Elektromagneten abgeschaltet wird.

In einer bevorzugten Ausgestaltung der Erfindung ist der plastische Anteil so ausgelegt, dass die Vergrößerung des Verschiebewegs zumindest annähernd kompensiert wird. Dadurch hat die elektromagnetische Reibscheibenkupplung über ihre Gesamtlebensdauer einen nahezu konstanten Luftspalt.

Die Rückstellmittel sind vorzugsweise so ausgebildet, dass ein Verschleiß kompensierbar ist, der ein mehrfaches des originären Verschiebewegs ausmacht. Selbst bei einer derartigen Verschiebeweg- bzw. Luftspaltvergrößerung findet durch die plastische Kompensation keine wesentliche Änderung der Verhältnisse für den elastischen Anteil der Rückstellmittel statt, so dass lediglich eine verhältnismäßig kleine Erhöhung der Auslenkkräfte über die Grundverhältnisse hinaus, die dann eine plastische Verformung bewirkt, auftritt. D.h. insgesamt arbeitet die elektromagnetische Reibscheibenkupplung auch bei einem Verschleiß um ein mehrfaches des originären Verschiebewegs im Wesentlichen so, als ob der originäre Zustand vorhanden wäre.

Vorzugsweise wird jeder auftretende Verschleiß sofort durch plastische Verformung kompensiert, womit sich der Federweg, d.h. der effektive Verschiebeweg bzw. Luftspalt und somit die Verhältnisse für die elastische Verstellung des Ankerelements nur minimal ändern.

In einer weiteren besonders bevorzugten Ausgestaltung der Erfindung sind die Rückstellmittel geometrisch derart ausgestaltet, dass sich Zonen mit plastischer Verformung ergeben, in welcher eine plastische Verformung bei einem vergrößerten originären Verschiebeweg durch Verschleiß stattfindet. Insbesondere wenn die Rückstellmittel eine Flachfeder mit gebogenen Federarmen umfasst, werden Bereiche mit plastischen Eigenschaften bis zu einem gewissen Maß auch elastische Eigenschaften aufweisen, wobei durch entsprechende Formgebung der Federarme vorzugsweise Bereiche realisiert werden, die im Wesentlichen nur elastische Eigenschaften zeigen.

Im Weiteren ist es besonders vorteilhaft, wenn die Rückstellmittel wenigstens eine Komponente mit überwiegend elastischen Eigenschaften und wenigstens eine Komponente mit plastischen Eigenschaften umfassen, die bei einem vergrößertem originären Verschiebeweg durch Verschleiß sich plastisch verformt. Vorzugsweise sind diese Komponenten in einer Reihenschaltung angeordnet. Damit besteht die Möglichkeit die elastischen und die plastischen Eigenschaften in einfacher Weise entkoppelt voneinander vorgeben bzw. einstellen zu können. Ein solcher Aufbau der Rückstellmittel lässt sich durch die entkoppelten Strukturen vergleichsweise einfacher entwerfen.

Beispielsweise umfasst die plastische Komponente der Rückstellmittel ein umgekantetes kreisringförmiges Blechelement. Vorzugsweise sind in der Ebene des Blechelements im Kreisringabschnitt Arme freigeschnitten, die sich plastisch verformen, wenn beispielsweise die Auslenkung einer elastischen Komponente verschleißbedingt größer ist als der originäre Schiebeweg. Als elastische Komponente der Rückstellmittel kommt z.B. ein Gummielement, beispielsweise ein Gummiring in Betracht. Vorzugsweise sitzt der Gummiring zwischen einer Flanschscheibe und der plastischen Komponente, z.B. dem umgekanteten kreisringförmigen Blechelement, an dem dann das Ankerelement montiert ist.

Das überwiegend elastische Element, z.B. das Gummielement ist vorzugsweise so ausgelegt, dass es neben elastischen Rückstelleigenschaften auch eine Torsionsdämpfung ermöglicht.

Das Zusammenspiel eines plastischen und elastischen Anteils wird auch so gesehen, dass es zu einer plastischen Verformung dann kommt, wenn die Auslenkkräfte des elastischen Anteils eine vorgegebene Größenordnung überschreiten, was der Fall ist, wenn durch Verschleiß der elastische Anteil dazu gezwungen wird, sich stärker elastisch zu verformen, als dies beim originären nicht verschleißbehafteten Verschiebeweg notwendig ist.

### Zeichnungen:

Nähere Ausführungsbeispiele der Erfindung sind in den Zeichnungen dargestellt und unter Angabe weiterer Vorteile und Einzelheiten nachstehend näher erläutert. Es zeigen
- Figur 1: eine zweistufige Reibscheibenkupplung in einer teilweise geschnittenen Seitenansicht,
- Figur 2: die Kennlinie der Federkraft F über den Auslenkweg s verschiedener Federelemente,
- Figur 3: ein elastisch-plastisches Rückstellelement mit Ankerscheibe in einer perspektivischen Darstellung,
- Figur 4: die Kennlinie Kraft über Weg eines elastischen Rückstellelements sowie eines elastisch-plastischen Rückstellelements,
- Figur 5a: ein elastisch-plastisches Rückstellelement in Form einer Flachfeder in perspektivischer Darstellung,
- Figur 5b: die dazugehörige Kennlinie Kraft über Weg,
- Figur 6a: die teilweise aufgeschnittene perspektivische Ansicht eines elastisch-plastischen Rückstellelements, das eine Komponente mit überwiegend elastischen Eigenschaften und eine Komponente aufweist, die plastische Verformung zulässt,
- Figur 6b: in einer geschnittenen perspektivischen Ansicht das Rückstellelement aus Figur 6a zwischen einem Ankerelement und einem Flanschteil, z.B. eines Lüfterrades angeordnet und
- Figur 6c: die Kennlinie Kraft über Weg der Komponente mit überwiegend elastischen Eigenschaften sowie der Komponente mit elastisch-plastischen Eigenschaften des Rückstellelements gemäß Figur 6a und 6b.

### Beschreibung der Ausführungsbeispiele:

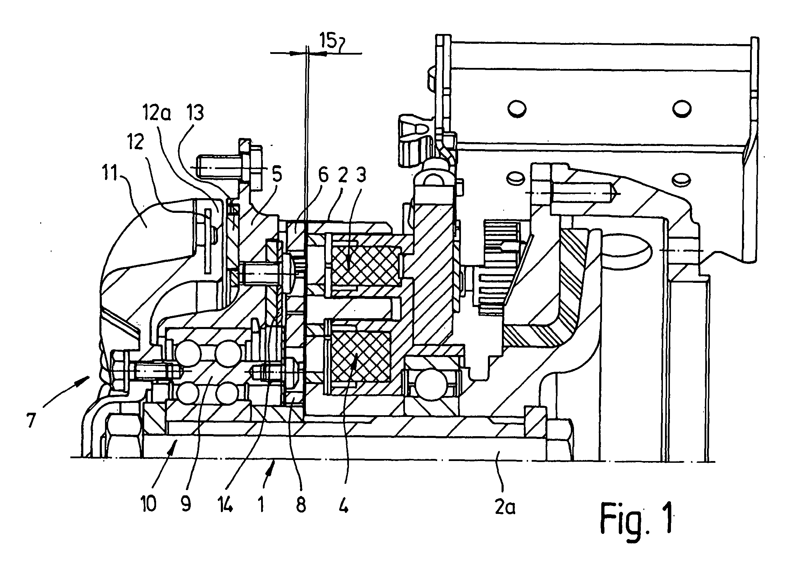

In Figur 1 ist eine zweistufige Reibscheibenkupplung 1 dargestellt. Die elektromagnetische Kupplung 1 umfasst einen Rotor 2, der z.B. über eine Antriebswelle 2a angetrieben wird, sowie Elektromagneten 3, 4, einen in Drehung zu versetzenden Drehflansch 5, z.B. eines Lüfterrades mit einer Ankerscheibe 6 sowie eine Wirbelstromkupplung 7.

In einer ersten Stufe der zweistufigen Kupplung ist die Wirbelstromkupplung 7 wirksam, in dem der Elektromagnet 4 bestromt ist, wodurch eine Ankerscheibe 8 gegen den Rotor 2 gezogen wird, so dass ein Mittelring 9 eines zweistufigen Kugellagers 10 mit dem Rotor 2 mitrotiert. An diesem Mittelring 9 ist ein Drehelement 11 mit einer eingegossenen Stahlscheibe 12 montiert, das somit mit dem Mittelring 9 rotiert. In einem Wirbelstrombereich 12a werden durch gegenüberliegende Dauermagneten 13, die am Drehflansch 5 angeordnet sind, Wirbelströme erzeugt, die ein Magnetfeld ausbilden, das der Ursache entgegenwirkt, so dass über die Wirbelstromkupplung 7 der Drehflansch 5 mit geringerer Drehzahl als das Drehelement 11 mitgeschleppt wird.

Die zweite Stufe der Reibscheibenkupplung wird wirksam, wenn der Elektromagnet 3 bestromt wird. In diesem Fall wird die Ankerscheibe 6, die über ein elastisch-plastisches Rückstellelement 14 mit dem Drehflansch 5 verbunden ist, gegen den Rotor 2 gezogen, wodurch bei nicht schleifender Ankerscheibe 6 auf dem Rotor 2 der Drehflansch 5 die Drehzahl des Rotors besitzt.

Auch die erste Stufe der Kupplung kann mit einem elastisch-plastischen Rückstellelement ausgestattet werden, weshalb hierfür die nachstehenden Ausführungen entsprechend gelten.

Wird der Elektromagnet 3 ausgeschaltet, d.h. seine Magnetkraft zu null gesetzt, wird die Ankerscheibe 6 durch das Rückstellelement 14 vom Rotor 2 getrennt und in eine Rückstellposition zurückgeführt. In der Rückstellposition ist im nicht geschalteten Zustand des Elektromagneten 3 die Ankerscheibe 6 vom Rotor 2 durch einen Luftspalt 15 getrennt. Dieser Luftspalt muss so dimensioniert sein, dass der Elektromagnet 3 möglichst effektiv seine "Magnetkraft" auf die Ankerscheibe 6 übertragen kann, was zu einem möglichst geringen Luftspalt führt, jedoch auch gewährleistet ist, dass die Ankerscheibe 6 am Rotor 2 nicht durch z.B. im Betrieb auftretende axiale Schwingungen unbeabsichtigt anschlägt, wenn der Elektromagnet abgeschaltet ist. Um dieser Forderung zu genügen, müsste ein großer Luftspalt verwirklicht werden. Durch einen wiederholten Einschaltvorgang, bei welchem zwischen Ankerscheibe 6 und Rotor 2 eine Relativbewegung unter Reibschluss auftritt, entsteht Verschleiß, der den Luftspalt 15 im nicht geschalteten Zustand des Elektromagneten 3 zwischen den Reibpartnern vergrößert.

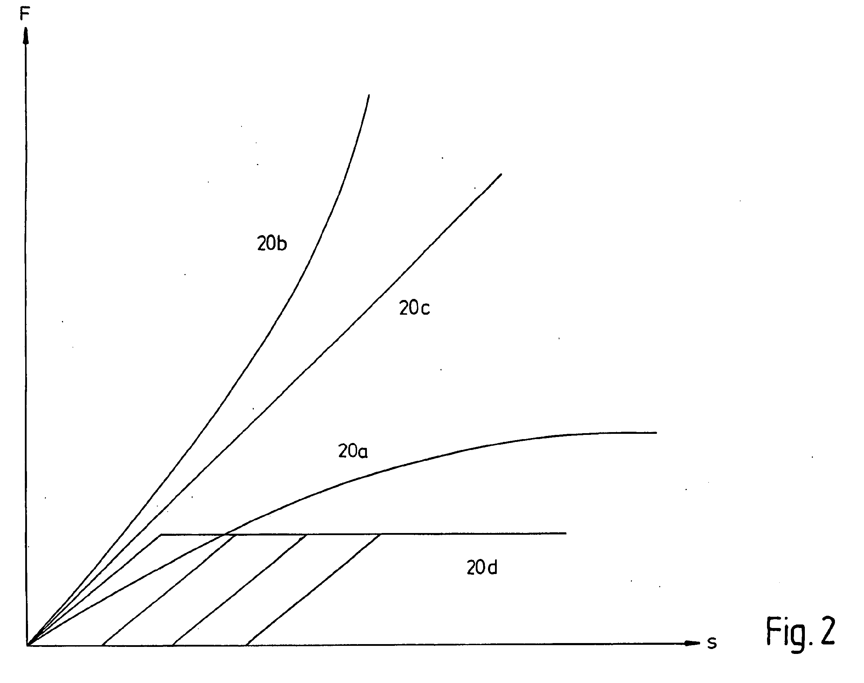

Eine Vergrößerung des Luftspalts führt dazu, dass die notwendige Auslenkkraft für ein konventionelles Rückstellelement immer größer wird und zudem die Magnetfeldeinwirkung auf den Anker immer stärker abnimmt. Dieser unerwünschte Effekt kann teilweise kompensiert werden, indem man z.B. wie in Figur 2 dargestellt eine Feder mit degressiver Kennlinie 20a einsetzt. Dennoch führt diese Kennlinie dazu, dass mit zunehmenden Verschleiß, der zu einem größer werden des Luftspalts 15 führt, das übertragbare Drehmoment soweit absinkt, dass die Reibscheibenkupplung 1 ihre sichere Funktion verliert.

In Figur 2 ist neben der Kennlinie 20a für eine Feder mit degressiver Kennlinie eine progressive Kennlinie 20b, eine lineare Kennlinie 20c sowie eine Kennlinie 20d für eine Feder mit elastisch-plastischen Eigenschaften dargestellt. Mit den Federn 20a, 20c kann das Verschleißproblem jedoch nur unzureichend gelöst werden. Dagegen kann mit einem elastisch-plastischen Federelement gemäß dem Rückstellelement 14 das Verschleißproblem gelöst werden.

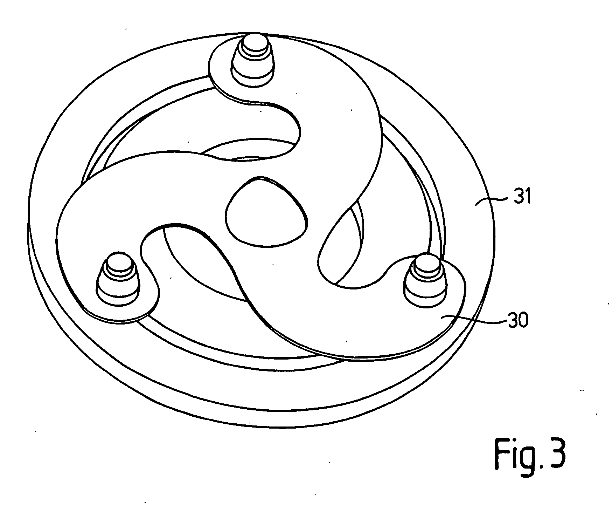

In Figur 3 ist ein elastisch-plastisches Rückstellelement 30 an einer Ankerscheibe 31 montiert abgebildet. Mit diesem elastisch-plastischen Rückstellelement 30 lässt sich das Verschleißproblem lösen, indem das elastisch-plastische Rückstellelement sich immer um den Anteil des größer werdenden Luftspalt plastisch verformt, so dass die elastischen Anteile in einem Zustand benutzt werden können, der im Wesentlichen dem Ausgangszustand entspricht.

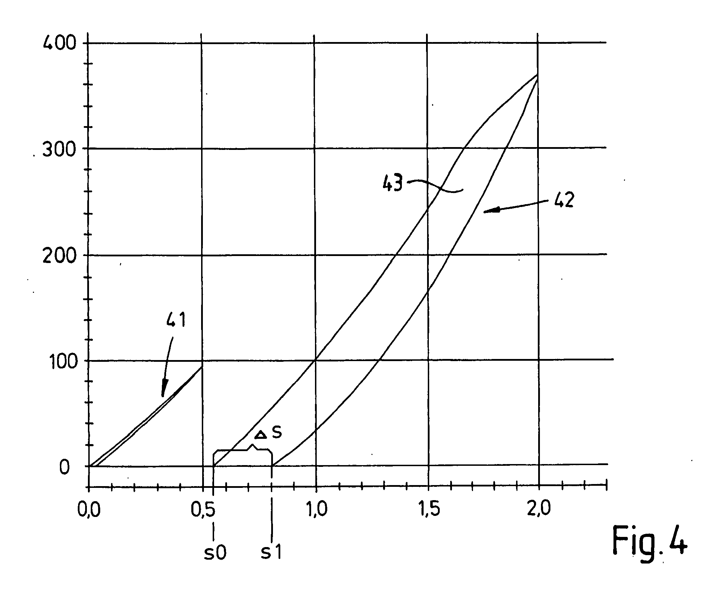

In Figur 4 ist die Kennlinie 41 einer elastischen Feder sowie die Kennlinie 42 eines elastisch-plastischen Rückstellelements dargestellt. Man sieht deutlich, dass sich die beiden Kennlinien dadurch unterscheiden, dass die Kennlinie 41 keine Hysterese, die Kennlinie 42 für das elastisch-plastische Rückstellelement aber eine Hysterese 43 aufweist. D.h. nach Auslenken des Rückstellelements um einen Weg sₓ von einer Ausgangsposition s₀ kehrt das Rückstellelement nicht mehr zum Ausgangspunkt s₀ sondern durch die plastische Verformung verursacht in eine Rückstellposition s₁ zurück, die sich von der Ausgangsposition s₀ durch einen zusätzlichen Weg Δs unterscheidet.

Diese Eigenschaft eines elastisch-plastischen Rückstellelements 30 kann nun dazu genutzt werden, auftretende Auslenkvergrößerungen für das Rückstellelement 30, die durch Verschleiß mit größer werdendem Luftspalt 15 zustande kommen, durch eine plastische Verformung des Rückstellelements 30 ständig zu kompensieren.

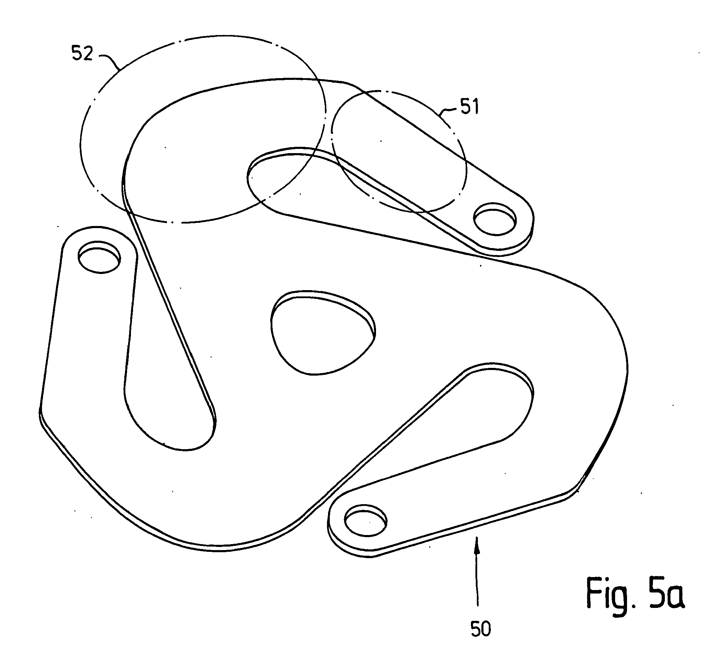

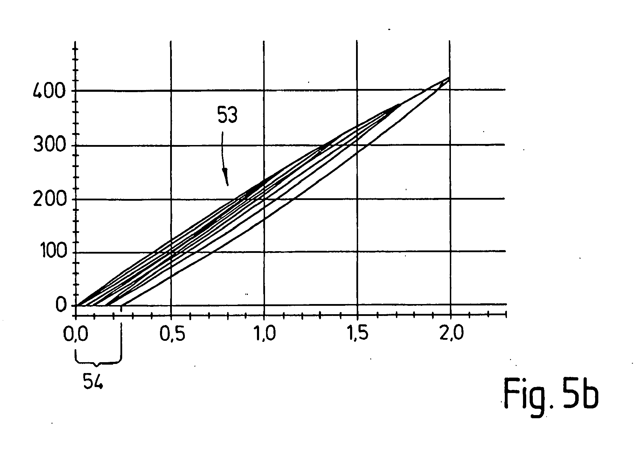

In Figur 5a ist ein weiteres elastisch-plastisches Rückstellelement 50 abgebildet, das Zonen 51 mit überwiegend elastischen Eigenschaften, aber auch Zonen 52 mit elastisch-plastischen Eigenschaften aufweist. Das Ergebnis ist eine Kennlinie 53, bei welcher ersichtlich ist, dass der Rückstellpunkt des Rückstellelements sich entlang der X-Achse (Weg-Achse) des Schaubildes aufgrund der plastischen Verformung 54 nach rechts verschiebt, jedoch nur wenn eine Auslenkkraft durch einen vergrößerten Luftspalt 15 überschritten ist.

Das Rückstellelement 50 ist im vorliegenden Beispiel als dreiarmiges Flachfederelement ausgebildet, bei welchem die Arme in einer Biegung verlaufen. Der Biegungsbereich 52 ist so ausgebildet, dass dieser elastisch-plastische Eigenschaften besitzt.

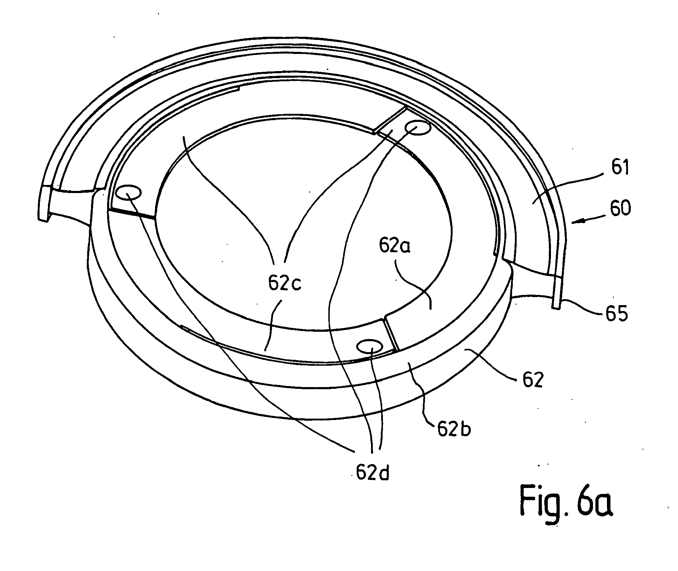

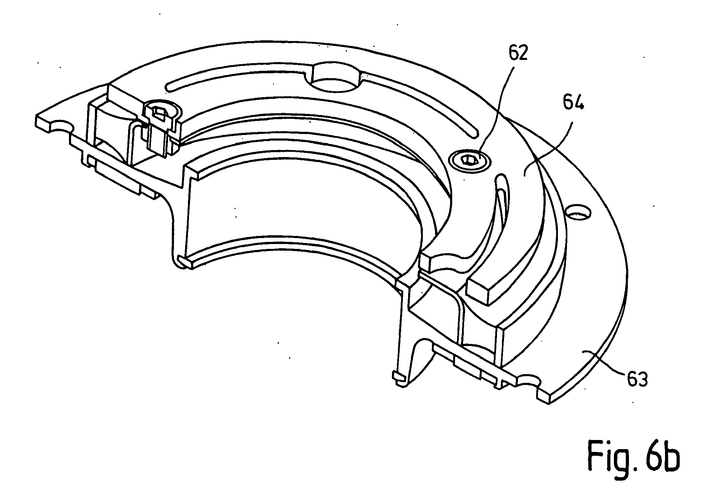

Die elastisch-plastischen Eigenschaften eines Gesamtrückstellelements können auch dadurch erreich werden, dass so wie im Rückstellelement 60 gemäß der Figuren 6a und 6b eine Komponente 61 mit überwiegend elastischen Eigenschaften in Form eines Gummiringes mit einer Komponente 62 mit elastisch-plastischen Eigenschaften in Reihenschaltung kombiniert wird. Gleichzeitig zur Funktion des elastischen Rückstellers übernimmt der Gummiring 61 die Funktion einer Torsionsdämpfung. In Figur 6b ist die Anordnung des Rückstellelements 60 zwischen einem Drehflansch 63, z.B. eines Lüfterrades und einer Ankerscheibe 64 dargestellt. Die Ankerscheibe 64 ist mit der Komponente 62 und der Gummiring 61 über einen Haltering 65 mit dem Drehflansch 63 fest verbunden.

Die elastisch-plastische Komponente 62 ist als kreisringförmiges Blechelement mit einem Kreisringbereich 62a und einem umgekanteten Bereich 62b ausgebildet.

Im Kreisringbereich 62a sind dem Kreisring folgende Arme 62c freigeschnitten, die die gewünschten elastisch-plastischen Eigenschaften aufweisen. Am vorderen Ende der Arme 62c sind über Bohrungen 62d Schrauben 62e (siehe Figur 6b) oder andere Verbindungselemente eingefügt, um damit die Ankerscheibe 64 anzuordnen.

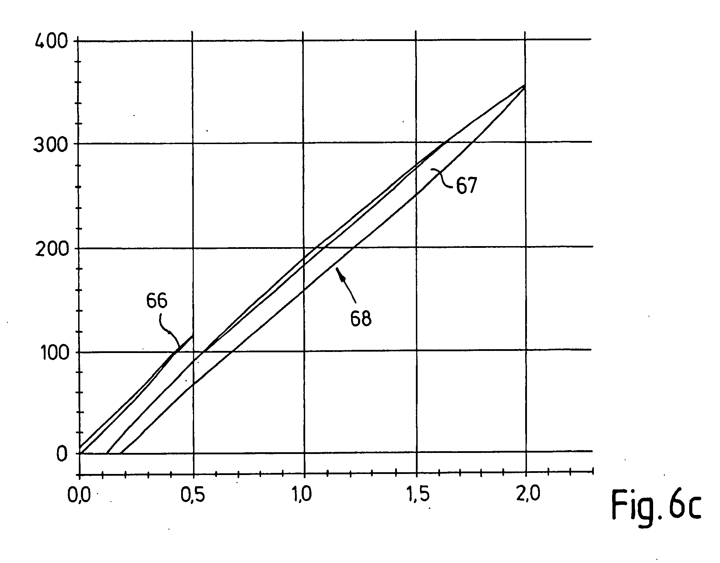

In Figur 6c ist die Kennlinie der Einzelkomponenten 62 und 63 des Rückstellelements 60 dargestellt. Das Gummielement 61 hat eine überwiegend hystereselose elastische Kennlinie 66, wogegen das umgekantete Blechringteil 62 elastisch-plastische Eigenschaften mit entsprechender Hysterese 67 der Kennlinie 68 aufweist.

Beispielsweise beträgt der Luftspalt zwischen Ankerscheibe 6, 31, 64 originär 0,3 bis 0,5 mm. Normalerweise ist ab einer Größe des Luftspalts 15 von 1 bis 1,2 mm durch Verschleiß die Funktionstauglichkeit der entsprechenden Reibscheibenkupplung nicht mehr in ausreichendem Maße gegeben.

Durch das erfindungsgemäße Prinzip kann ein zusätzlicher Verschleiß von 1 bis 1,5 mm bei Beibehaltung eines ursprünglichen Luftspaltes von z.B. 0,3 bis 0,5 mm leicht kompensiert werden. Damit ergibt sich eine deutlich längere Lebensdauer von mit erfindungsgemäßen Rückstellelementen 14, 30, 50, 60 ausgestatteten Reibscheibenkupplungen.

### Bezugszeichenliste:

- 1: Reibscheibenkupplung
- 2: Rotor
- 2a: Antriebswelle
- 3: Elektromagnet
- 4: Elektromagnet
- 5: Drehflansch
- 6: Ankerscheibe
- 7: Wirbelstromkupplung
- 8: Ankerscheibe
- 9: Mittelring
- 10: zweistufiges Lager
- 11: Drehelement
- 12: Stahlscheibe
- 12a: Wirbelstrombereich
- 13: Dauermagnet
- 14: Rückstellelement
- 15: Luftspalt
- 20a: Kennlinie
- 20b: Kennlinie
- 20c: Kennlinie
- 20d: Kennlinie
- 30: elastisch-plastisches Rückstellelement
- 31: Ankerscheibe
- 41: Kennlinie
- 42: Kennlinie
- 43: Hysterese
- 50: elastisch-plastisches Rückstellelement
- 51: Zone
- 52: Zone
- 53: Kennlinie
- 60: Rückstellelement
- 61: Komponente
- 62: Komponente
- 62a: Kreisringbereich
- 62b: umgekanteter Bereich
- 62c: Arm
- 62d: Bohrung
- 62e: Schraube
- 63: Drehflansch
- 64: Ankerscheibe
- 65: Haltering
- 66: Kennlinie
- 67: Hysterese
- 68: Kennlinie

## Patentansprüche

1. Elektromagnetisch betätigbare Reibscheibenkupplung (1) mit einem Elektromagneten (3, 4), einem Rotor (2) und einem Ankerelement (6, 8, 31, 64), die mittels des Elektromagneten (3) mit einem Magnetfeld für ein Zusammenwirken von Rotor (2) und Ankerelement (6, 8, 31, 64) beaufschlagbar sind, wobei das Ankerelement (6, 8, 31, 64) an Rückstellmittel (14, 30, 50, 60) angeordnet ist, durch die das Ankerelement (6, 8, 31, 64) entlang einer Rotationsachse des Rotors (2) über Magnetkräfte um einen Verschiebeweg (15) in eine Anschlagposition am Rotor bewegbar ist und ohne Magnetkräfte elastisch in eine Position zurückkehrt, in welcher das Ankerelement und der Rotor sich berührungsfrei gegeneinander bewegen können, **dadurch gekennzeichnet, dass** die Rückstellmittel (14, 30, 50, 60) neben einem elastischen Anteil einen plastischen Anteil umfassen, der bei einem vergrößerten originären Verschiebeweg durch Verschleiß zu einer plastischen Verformung der Rückstellmittel (14, 30, 50, 60) führt, wobei es zu einer plastischen Verformung dann kommt, wenn die Auslenkkräfte des elastischen Anteils eine vorgegebene Größenordnung überschreiten, was der Fall ist, wenn durch Verschleiß der elastische Anteil dazu gezwungen wird, sich stärker zu verformen, als dies beim originären nicht verschleißbehafteten Verschiebeweg notwendig ist, so dass die Vergrößerung des Verschiebewegs (15) zumindest teilweise kompensierbar ist.

2. Kupplung nach Anspruch 1, **dadurch gekennzeichnet, dass** der plastische Anteil so ausgelegt ist, dass die Vergrößerung des Verschiebewegs (15) zumindest annähernd kompensiert wird.

3. Kupplung nach einem der vorhergehenden Ansprüche, **dadurch gekennzeichnet, dass** die Rückstellmittel (14, 30, 50, 60) geometrisch derart ausgestaltet sind, dass sich Zonen (52) mit plastischer Verformung ergeben, in welcher eine plastische Verformung bei einem vergrößerten orginären Verschiebeweg (15) durch Verschleiß stattfindet.

4. Kupplung nach einem der vorhergehenden Ansprüche, **dadurch gekennzeichnet, dass** die Rückstellmittel (14, 30, 50) eine Flachfeder mit gebogenen Armen umfasst.

5. Kupplung nach einem der vorhergehenden Ansprüche, **dadurch gekennzeichnet, dass** die Rückstellmittel (60) wenigstens eine Komponente (61) mit überwiegend elastischen Eigenschaften und wenigstens eine Komponente (62) mit plastischen Eigenschaften umfassen, die bei einem vergrößerten orginären Verschiebeweg (15) durch Verschleiß sich plastisch verformt.

6. Kupplung nach einem der vorhergehenden Ansprüche, **dadurch gekennzeichnet, dass** die Rückstellmittel (60) ein umgekantetes, kreisringförmiges Blechelement (62) aufweisen.

7. Kupplung nach einem der vorhergehenden Ansprüche, **dadurch gekennzeichnet, dass** die Rückstellmittel (60) ein Gummielement (61) umfassen.

8. Kupplung nach einem der vorhergehenden Ansprüche, **dadurch gekennzeichnet, dass** das Rückstellmittel mit überwiegend elastischen Eigenschaften gleichzeitig Eigenschaften eines Torsionsdämpfers besitzt.

## Claims

1. An electromagnetically operable friction disk clutch (1) with an electromagnet (3, 4), a rotor (2) and an armature element (6, 8, 31, 64), which by means of the electromagnet (3) can be charged with a magnetic field for the interaction of the rotor (2) and armature element (6, 8, 31, 64), wherein the armature element (6, 8, 31, 64) is arranged on resetting means (14, 30, 50, 60), by means of which the armature element (6, 8, 31, 64) can be moved along a rotation axis of the rotor (2) by magnetic forces about a displacement path (15) into a stop position on the rotor, and returns elastically without magnetic forces into a position in which the armature element and the rotor can move relative to one another without touching, **characterised in that** the resetting means (14, 30, 50, 60) comprise an elastic component and also a plastic component which leads, in the case of an increase in the original displacement path caused by wear, to a plastic deformation of the resetting means (14, 30, 50, 60), whereby a plastic deformation does takes place when the deflection forces of the elastic part exceed a predefined size, which occurs when due to wear the elastic part is forced to become more deformed than is necessary for the original non-worn displacement path, so that the increase in the displacement path (15) can be compensated for at least partly.

2. The clutch according to claim 1, **characterised in that** the plastic component is designed so that the increase in the displacement path (15) is compensated for at least approximately.

3. The clutch according to one of the preceding claims, **characterised in that** the resetting means (14, 30, 50, 60) are designed geometrically, so that plastic deformation zones (52) are formed, in which plastic deformation takes place with an increased original displacement path (15) caused by wear.

4. The clutch according to one of the preceding claims, **characterised in that** the resetting means (14, 30, 50) comprises a flat spring with curved arms.

5. The clutch according to one of the preceding claims, **characterised in that** the resetting means (60) comprise at least one component (61) with predominantly elastic properties, and at least one component (62) with plastic properties, which deforms plastically with an increased original displacement path (15) caused by wear.

6. The clutch according to one of the preceding claims, **characterised in that** the resetting means (60) comprise an edged, annular sheet-metal element (62).

7. The clutch according to one of the preceding claims, **characterised in that** the resetting means (60) comprise a rubber element (61).

8. The clutch according to one of the preceding claims, **characterised in that** the resetting means with predominantly elastic properties also has torsion damper properties at the same time.

## Revendications

1. Embrayage à friction à commande électromagnétique (1) comprenant un électroaimant (3, 4), un rotor (2) et un élément d'induit (6, 8, 31, 64), lesquels peuvent être soumis à l'action d'un champ magnétique au moyen de l'électroaimant (3) en vue d'une coopération du rotor (2) et de l'élément d'induit (6, 8, 31, 64), l'élément d'induit (6, 8, 31, 64) étant agencé sur des moyens de rappel (14, 30, 50, 60), grâce auxquels l'élément d'induit (6, 8, 31, 64) peut être déplacé dans une position de butée contre le rotor, le long d'un axe de rotation du rotor (2) par le biais de forces magnétiques autour d'une course de déplacement (15), et revenir de façon élastique sans forces magnétiques dans une position dans laquelle l'élément d'induit et le rotor peuvent se déplacer l'un par rapport à l'autre sans contact,
**caractérisé en ce que** les moyens de rappel (14, 30, 50, 60) comprennent, outre une partie élastique, une partie plastique qui entraîne une déformation plastique des moyens de rappel (14, 30, 50, 60) en cas d'augmentation de la course de déplacement d'origine à cause de l'usure, ce qui aboutit alors à une déformation plastique quand les forces de déviation de la partie élastique dépassent un ordre de grandeur prédéfini, ce qui est le cas lorsque la partie élastique est contrainte par l'usure de se déformer plus fortement que cela n'est nécessaire dans le cadre de la course de déplacement d'origine non soumise à l'usure, de sorte que l'augmentation de la course de déplacement (15) peut être compensée au moins partiellement.

2. Embrayage selon la revendication 1,
**caractérisé en ce que** la partie plastique est conçue de façon à ce que l'augmentation de la course de déplacement (15) soit compensée au moins approximativement.

3. Embrayage selon l'une des revendications précédentes,
**caractérisé en ce que** les moyens de rappel (14, 30, 50, 60) sont conçus d'un point de vue géométrique de telle façon qu'on obtient des zones (52) à déformation plastique, dans lesquelles une déformation plastique se produit en cas d'augmentation de la course de déplacement (15) d'origine à cause de l'usure.

4. Embrayage selon l'une des revendications précédentes,
**caractérisé en ce que** les moyens de rappel (14, 30, 50) comprennent un ressort plat avec des branches courbées.

5. Embrayage selon l'une des revendications précédentes,
**caractérisé en ce que** les moyens de rappel (60) comprennent au moins un composant (61) possédant des propriétés essentiellement élastiques et au moins un composant (62) possédant des propriétés plastiques, lequel se déforme plastiquement en cas d'augmentation de la course de déplacement (15) d'origine à cause de l'usure.

6. Embrayage selon l'une des revendications précédentes,
**caractérisé en ce que** les moyens de rappel (60) présentent un élément en tôle (62) renversé en forme de couronne.

7. Embrayage selon l'une des revendications précédentes,
**caractérisé en ce que** les moyens de rappel (60) comprennent un élément en caoutchouc (61).

8. Embrayage selon l'une des revendications précédentes,
**caractérisé en ce que** le moyen de rappel ayant des propriétés essentiellement élastiques possède en même temps les propriétés d'un amortisseur de torsion.
